# EUROPÄISCHE PATENTANMELDUNG

(11) **EP 4 681 944 A1**
(43) Veröffentlichungstag der Anmeldung: **21.01.2026**
(21) Anmeldenummer: 24188585.4
(22) Anmeldetag: 15.07.2024
(51) Int. Cl.: B60D 1/48, B60R 19/02

(54) **ANHÄNGEVORRICHTUNG**

(71) Anmelder: MAGNA STEYR Fahrzeugtechnik GmbH & Co KG, 8041 Graz (AT)
(72) Erfinder: SCHLENER, Michael, 8047 Graz-Ragnitz (AT); ZORIC, Vojkan, 8042 Graz (AT); GOETTFRIED, Dietmar, 8071 Hausmannstaetten (AT); LECHNER, David, 8052 Graz (AT)
(74) Vertreter: Zangger, Bernd

(57) **Zusammenfassung**

Eine Anhängevorrichtung, zur nachträglichen Montage einer Anhängekupplung an einem Kraftfahrzeug, wobei das Kraftfahrzeug einen tragenden Fahrzeugrahmen (7) aufweist, wobei der Fahrzeugrahmen (7) einen Querträger (6) mit einem Profil aufweist, wobei die Anhängevorrichtung eine Konsole (1) und eine Anhängekupplung umfasst, wobei die Konsole (1) ein längliches Bauteil ist, so dass sich die Konsole (1) zumindest abschnittsweise entlang des Querträgers (6) erstrecken kann, wenn sie am Querträger (6) befestigt ist, wobei an der Konsole (1) die Anhängekupplung befestigbar ist, wobei die Anhängevorrichtung eine Schraubplatte (2) umfasst, wobei die Schraubplatte (2) ein längliches Bauteil ist, das dazu ausgebildet ist, in das Profil des Querträgers (6) seitlich eingeschoben zu werden und/oder im Inneren des Profils des Querträgers (6) am Profil anzuliegen, so dass die Schraubplatte (2) in montiertem Zustand innerhalb des Profils des Querträgers (6) angeordnet ist und an der Innenseite des Profils zumindest an einem Umfangsabschnitt des Profils anliegt, wobei die Konsole (1) und die Schraubplatte (2) dazu ausgebildet sind, dass die Konsole (1) an der Schraubplatte (2) mittels ersten Befestigungsmitteln (3), insbesondere mittels Schrauben, derart befestigt wird, dass das Profil des Querträgers (6) zwischen Konsole (1) und Schraubplatte (2) geklemmt ist.

## Beschreibung

### Gebiet der Erfindung

Die vorliegende Erfindung betrifft eine Anhängevorrichtung, zur nachträglichen Montage einer Anhängekupplung an einem Kraftfahrzeug und ein Kraftfahrzeug mit einer solchen Anhängevorrichtung, sowie ein Verfahren zur Herstellung des Kraftfahrzeugs.

### Stand der Technik

Es ist bekannt, dass Kraftfahrzeuge mit einer Anhängekupplung ausgestattet sein können, um beispielsweise einen Anhänger mit der Anhängekupplung zu koppeln und mit dem Kraftfahrzeug mitzuführen. Manche Kraftfahrzeuge weisen ab Werk keine derartige Anhängekupplung auf. Ein nachträglicher Einbau einer Anhängekupplung in einem Kraftfahrzeug kann je nach vorhandenem lasttragendem Aufbau und dessen Geometrie schwierig und zeitaufwändig sein. Die Montage der Anhängekupplung soll möglichst ohne aufwendige Demontagearbeiten am Kraftfahrzeug möglich sein. Schweißarbeiten am bestehenden Fahrzeug sollten möglichst vermieden werden. Auch muss eine Befestigung einer Anhängekupplung am Kraftfahrzeug eine ideale Lastverteilung gewährleisten.

Die DE 10 2021 120 475 A1 offenbart einen Bausatz zur Montage eines Heckträgers mit einem Stoßfänger eines Kraftfahrzeugs, mit einem mit einem Querträger des Stoßfängers verbindbaren Adapter und einer zur Befestigung des Heckträgers ausgelegten Kugelkopf-Kupplung, wobei der Adapter eine erste Haltescheibe und eine zur ersten Haltescheibe beabstandet postionierbare zweite Haltescheibe zur Befestigung der Kugelkopf-Kupplung zwischen der ersten Haltescheibe und der zweiten Haltescheibe aufweist, wobei die erste Haltescheibe und die zweite Haltescheibe jeweils eine im Wesentlichen U-förmige Aufnahmeöffnung zum Umgreifen einer in X-Richtung nach hinten weisenden Rückseite, einer von der Rückseite in X-Richtung abstehenden Oberseite und einer von der Rückseite in X-Richtung abstehenden Unterseite des Querträgers aufweist, wobei der Adapter einen über an der Rückseite, der Oberseite und der Unterseite vorbei verlaufende lösbare Befestigungsmittel mit der ersten Haltescheibe und/oder mit der zweiten Haltescheibe befestigbaren Montageflansch aufweist.

### Zusammenfassung der Erfindung

Es ist eine Aufgabe der Erfindung, eine Anhängevorrichtung, zur nachträglichen Montage einer Anhängekupplung an einem Kraftfahrzeug, anzugeben, die zumindest einige der zuvor genannten Probleme vermeidet und insbesondere einfach nachträglich zu montieren ist und eine gute Lastverteilung am Kraftfahrzeug ermöglicht. Zudem soll ein Kraftfahrzeug mit einer derart verbesserten Anhängevorrichtung angegeben werden und ein einfaches und kostengünstiges Verfahren zur Herstellung eines solchen Kraftfahrzeugs, insbesondere durch nachträglichen Einbau der Anhängevorrichtung.

Die Lösung der Aufgabe erfolgt durch eine Anhängevorrichtung, zur nachträglichen Montage einer Anhängekupplung an einem Kraftfahrzeug, wobei das Kraftfahrzeug einen tragenden Fahrzeugrahmen aufweist, wobei der Fahrzeugrahmen einen Querträger mit einem Profil aufweist, wobei die Anhängevorrichtung eine Konsole und eine Anhängekupplung umfasst, wobei die Konsole ein längliches Bauteil ist, so dass sich die Konsole zumindest abschnittsweise entlang des Querträgers erstrecken kann, wenn sie am Querträger befestigt ist, wobei an der Konsole die Anhängekupplung befestigbar ist, wobei die Anhängevorrichtung eine Schraubplatte umfasst, wobei die Schraubplatte ein längliches Bauteil ist, das dazu ausgebildet ist, in das Profil des Querträgers seitlich eingeschoben zu werden und/oder im Inneren des Profils des Querträgers (6) am Profil anzuliegen, so dass die Schraubplatte in montiertem Zustand innerhalb des Profils des Querträgers angeordnet ist und an der Innenseite des Profils zumindest an einem Umfangsabschnitt des Profils anliegt, wobei die Konsole und die Schraubplatte dazu ausgebildet sind, dass die Konsole an der Schraubplatte mittels ersten Befestigungsmitteln, insbesondere mittels Schrauben, derart befestigt wird, dass das Profil des Querträgers zwischen Konsole und Schraubplatte geklemmt ist.

Erfindungsgemäß umfasst eine Anhängevorrichtung eine Konsole, an der die Anhängekupplung befestigbar ist, befestigt ist oder die die Anhängekupplung ausbildet, und zusätzlich eine Schraubplatte. Sowohl Konsole als auch Schraubplatte sind längliche Bauteile, die sich im montierten Zustand entlang eines Querträgers des Fahrzeugs erstrecken. Im montierten Zustand ist die Schraubplatte in den Querträger eingeschoben und befindet sich somit im Inneren des Querträgers. Konsole und Schraubplatte sind im montierten Zustand entlang ihrer Erstreckung am Querträger mit Befestigungsmitteln, insbesondere mittels Schrauben, aneinander befestigt, so dass das Profil des Querträgers zwischen Konsole und Schraubplatte geklemmt ist.

Die Konsole und die geometrische Ausgestaltung der Schraubplatte zur Montage einer Anhängekupplung sind somit dazu ausgebildet, dass diese ohne aufwendige Demontagearbeiten installiert werden können, sobald das Profil eines Querträgers von der Seite her offen ist. Durch diese Gestaltung sind keine Schweißarbeiten am bestehenden Fahrzeug nötig. Die Schraubplatte ist durch ihre längliche Erstreckung so ausgelegt, dass sie eine ideale Lastverteilung gewährleistet.

Die Bezeichnung "länglich" für ein Bauteil bedeutet, dass das Bauteil in einer Richtung länger ausgebildet ist, als in den beiden Richtungen die normal darauf stehen, bevorzugt zumindest doppelt so lang. In dieser längeren Richtung weist das Bauteil an beiden Enden somit "axiale Enden" auf. Diese längere Richtung der Bauteile ist im montierten Zustand entlang der Längserstreckung des Querträgers ausgerichtet. Der Querträger ist im Wesentlichen normal auf die übliche Fahrtrichtung des Kraftfahrzeugs ausgerichtet. Der Querträger ist Teil eines tragenden Fahrzeugrahmens, wobei der tragende Fahrzeugrahmen insbesondere ein Leiterrahmen ist. Der Begriff "im Wesentlichen normal auf" umfasst auch Fahrzeuge, die einen nicht geraden Querträger aufweisen, wobei der Querträger in seiner Längserstreckung - quer zur Fahrtrichtung - beispielsweise gebogen oder mit leichten Winkelkorrekturen versehen ist, um besser in die Fahrzeugstruktur zu passen.

Die Befestigung einer Anhängekupplung kann mittels Konsole und eingeschobener und/oder an der Innenseite des Profils anliegender Schraubplatte an einer vorhandenen Querverbindung an einem Leiterrahmen ohne Schweißarbeiten erfolgen, bevorzugt mit inkludierten Verstärkungsmaßnahmen zur Kraftaufnahme.

Einige Vorteile, die mit der Erfindung erreicht werden können, sind:
1. Vermeidung von Schweißarbeiten an einem Kraftfahrzeug bei nachträglicher Montage einer Anhängerkupplung.
2. Bevorzugt werden die notwendigen Löcher zur Verschraubung bereits bei der Entwicklung des Fahrzeuges im Querträger vorgesehen. Der Querträger des Kraftfahrzeugs weist somit bevorzugt bereits die Löcher zur Durchführung der Befestigungsmittel auf.
3. Fahrzeuge ohne Anhängekupplung können auf einfache Weise mit einer solchen ausgerüstet werden, beispielsweise durch den Kunden des Kraftfahrzeugs.
4. Ein Einschubteil dient zur Verstärkung und gleichmäßigen Krafteinleitung an die umliegenden Bauteile. Durch diese Verstärkung der Fahrzeugstruktur ist es möglich, erst durch die erfindungsgemäße Anhängevorrichtung dem Fahrzeug nachträglich die für das Anhängen/Ziehen von Anhängern erforderliche Steifigkeit und Festigkeit der Fahrzeugstruktur zu verleihen, wodurch die serienmäßige Grundausstattung der Fahrzeuge billiger wird und vor allem das Fahrzeuggewicht reduziert werden kann.
5. Wenn ein "Umfassen" des Querrohres aufgrund beengter Bauraumverhältnisse nicht möglich ist, kann mit dieser Lösung trotzdem eine Anhängevorrichtung an einem Kraftfahrzeug befestigt werden.

Weiterbildungen der Erfindung sind in den abhängigen Ansprüchen, der Beschreibung sowie den beigefügten Zeichnungen angegeben.

Vorzugsweise ist das Profil des Querträgers ein geschlossenes Profil, insbesondere ein Rundprofil oder ein Vierkantprofil, oder das Profil des Querträgers ist ein offenes Profil, das einen Innenraum definiert, wie insbesondere ein C-Profil ist. Das Querrohr kann beispielsweise entlang seiner Erstreckung in Längsrichtung sowohl Bereiche mit geschossenen als auch Bereiche mit offenem Profil aufweisen.

Der Umfangsabschnitt des Profils, an welchem die Schraubplatte in montiertem Zustand anliegt, ist bevorzugt gebogen, insbesondere kreisbogenförmig und die Schraubplatte ist daher vorzugsweise in diesem Umfangsabschnitt gebogen, insbesondere kreisbogenförmig, so dass die Schraubplatte am Umfangsabschnitt des Profils anliegen kann.

Bevorzugt wird die Konsole an der Schraubplatte mittels mehreren entlang ihrer Erstreckung in Längsrichtung hintereinanderliegenden ersten Befestigungsmitteln, insbesondere mehreren hintereinanderliegenden Schrauben, derart befestigt, dass das Profil des Querträgers zwischen Konsole und Schraubplatte geklemmt ist.

Vorzugsweise weisen die Konsole und die Schraubplatte entlang ihrer Erstreckung in Längsrichtung mehrere einander zugeordnete Schraublöcher auf, so dass die Konsole an der Schraubplatte mittels durch die Schraublöcher sich erstreckenden Schrauben befestigt werden kann.

Bevorzugt weist die Konsole an zumindest einem axialen Ende, bevorzugt an beiden axialen Enden, einen Befestigungsflansch auf, zur Befestigung der Konsole an dem Fahrzeugrahmen, insbesondere an einem Längsträger des Fahrzeugrahmens.

Vorzugsweise weist die Schraubplatte an zumindest einem axialen Ende, bevorzugt an beiden axialen Enden, einen Befestigungsflansch auf, zur Befestigung der Schraubplatte an dem Fahrzeugrahmen, insbesondere an dem Querträger des Fahrzeugrahmens, wobei die Konsole nicht an dem Befestigungsflansch befestigt ist.

Die Schraubplatte ist bevorzugt so lang, dass sie sich zumindest von einer Innenkante eines Längsträgers bis zur Innenkante eines gegenüberliegenden Längsträgers des Fahrzeugrahmens erstreckt. Besonders bevorzugt erstreckt sich die Schraubplatte sogar zumindest von einer Außenkante eines Längsträgers bis zur Außenkante eines gegenüberliegenden Längsträgers des Fahrzeugrahmens und steht vorzugsweise jenseits der Längsträger über.

Die Schraubplatte ist vorzugsweise einteilig ausgestaltet, kann aber auch aus mehreren Teilen zusammengesetzt sein.

Ein erfindungsgemäßes Kraftfahrzeug weist einen tragenden Fahrzeugrahmen auf, insbesondere einen Leiterrahmen, wobei der Fahrzeugrahmen einen Querträger mit einem Profil aufweist, wobei die Anhängevorrichtung eine Konsole und eine Anhängekupplung umfasst, wobei die Konsole ein längliches Bauteil ist, so dass sich die Konsole zumindest abschnittsweise entlang des Querträgers erstreckt und am Querträger befestigt ist, wobei an der Konsole die Anhängekupplung befestigt ist, wobei die Anhängevorrichtung eine Schraubplatte umfasst, wobei die Schraubplatte ein längliches Bauteil ist, das in das Profil des Querträgers seitlich eingeschoben ist, so dass die Schraubplatte innerhalb des Profils des Querträgers angeordnet ist und an der Innenseite des Profils zumindest an einem Umfangsabschnitt des Profils anliegt, wobei die Konsole an der Schraubplatte mittels ersten Befestigungsmitteln, insbesondere mittels Schrauben, derart befestigt ist, dass das Profil des Querträgers zwischen Konsole und Schraubplatte geklemmt ist.

Der Querträger des Kraftfahrzeugs weist bevorzugt entlang seiner Erstreckung in Längsrichtung mehrere Schraublöcher auf, die den Schraublöchern der Konsole und der Schraubplatte zugeordnet sind, so dass sich die ersten Befestigungsmittel, insbesondere Schrauben, zur Befestigung der Konsole an der Schraubplatte und zur Klemmung des Profils des Querträgers durch die Schraublöcher des Querträgers erstrecken.

Die Anhängevorrichtung des Kraftfahrzeugs weist vorzugsweise auch weitere der oben für eine erfindungsgemäße Anhängevorrichtung genannten Merkmale auf.

Ein Verfahren zur Herstellung eines solchen Kraftfahrzeug mit einer Anhängevorrichtung umfasst die Schritte, dass die Schraubplatte in das Profil des Querträgers seitlich eingeschoben wird und/oder im Inneren des Profils des Querträgers am Profil angelegt wird, so dass die Schraubplatte innerhalb des Profils des Querträgers angeordnet ist und an der Innenseite des Profils zumindest an einem Umfangsabschnitt des Profils anliegt, wobei die Konsole an der Schraubplatte mittels ersten Befestigungsmitteln, insbesondere mittels Schrauben, derart befestigt wird, dass das Profil des Querträgers zwischen Konsole und Schraubplatte geklemmt wird.

### Kurzbeschreibung der Zeichnungen

Die Erfindung wird im Folgenden beispielhaft unter Bezugnahme auf die Zeichnungen beschrieben.
- Fig. 1: ist eine Explosionsdarstellung einer erfindungsgemäßen Anhängevorrichtung, ohne Anhängekupplung.
- Fig. 2: ist eine dreidimensionale Darstellung einer erfindungsgemäßen Anhängevorrichtung (ohne Anhängekupplung) montiert an einem Kraftfahrzeug.
- Fig. 3: ist eine dreidimensionale Darstellung eines erfindungsgemäßen Kraftfahrzeugs im Bereich der Anhängevorrichtung (ohne Anhängekupplung).
- Fig. 4: ist eine dreidimensionale Darstellung der Lage der Schraubplatte der Anhängevorrichtung in einem erfindungsgemäßen Kraftfahrzeug.
- Fig. 5: ist eine Schnittansicht einer Verschraubung der Konsole mit der Schraubplatte in einem erfindungsgemäßen Kraftfahrzeug.

### Detaillierte Beschreibung der Erfindung

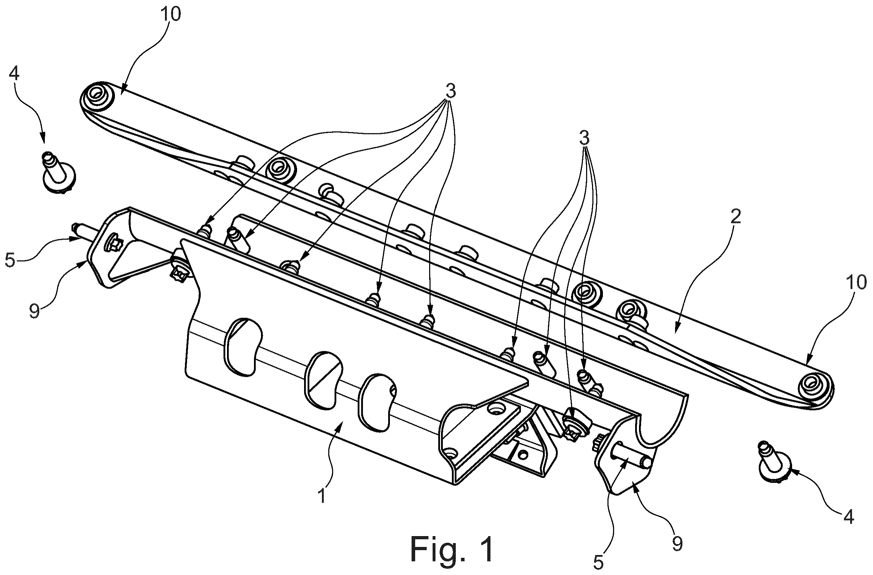

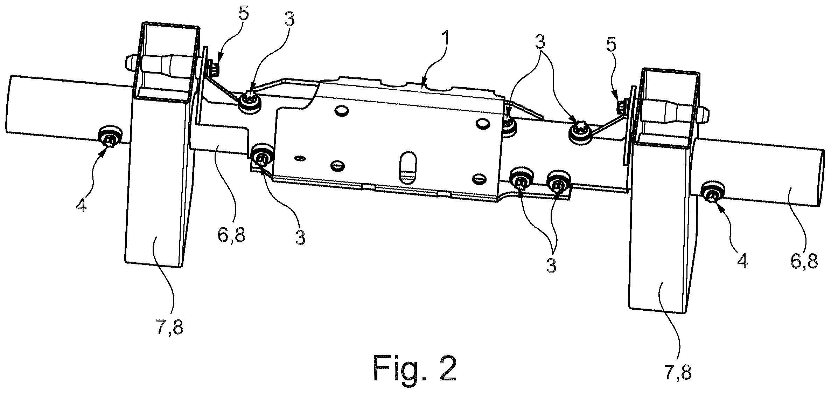

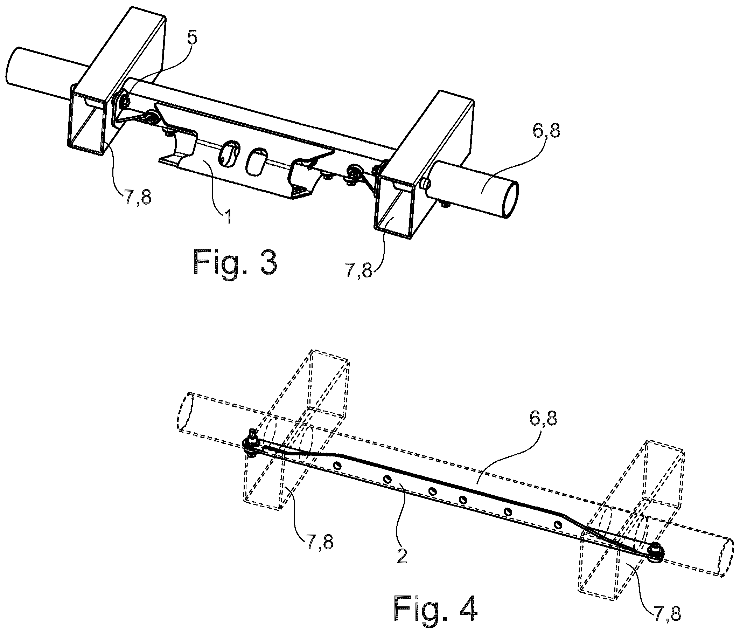

In Fig. 1 ist eine erfindungsgemäße Anhängevorrichtung, ohne Anhängekupplung, dargestellt. Fig. 2 und Fig. 3 zeigt die Anhängevorrichtung (ohne Anhängekupplung) an einem Kraftfahrzeug verbaut. Fig. 4 zeigt die Lage der Schraubplatte 2 am Fahrzeugrahmen 8, nämlich im Querträger 6.

Eine Schraubplatte 2 wird in eine vorhandene Querverbindung, nämlich in einen seitlich offenen Querträger 6, eingeschoben oder eingelegt und stellt damit die Basis für die Schraubverbindungen der Konsole 1, die selbst die Basis für die Anhängekupplung ist, an das Fahrzeug dar. Die geometrische Form des Querrohres das den Querträger 6 bildet, kann unterschiedlich sein. Durch einfache geometrische Anpassungen der Kontur der Konsole 1 und der Schraubplatte 2 können unterschiedliche Querrohrgeometrien zur Befestigung der Anhängevorrichtung verwendet werden, zum Beispiel rund, rechteckig, C-Profil.

Durch die Ausgestaltung der Schraubplatte 2 wird eine Verstärkungsfunktion des Gesamtsystems erreicht. Die infolge des Betriebes entstehenden Kräfte werden durch die Schraubplatte 2 gleichmäßig und flächig auf die Querverbindung, nämlich den Querträger 6, und auch auf die Längsstruktur des Fahrzeuges, nämlich die Längsträger 7, verteilt. Durch Verwendung der eingeschobenen Schraubplatte 2 kann die Verwendung von Durchgangsbohrungen im Querrohr, sowie auch eingesetzte bzw. geschweißte Hülsen im Querrohr, vermieden werden, um einen festen Schraubfall herzustellen.

Die Schraubplatte 2 ist so gestaltet das sie so weit wie möglich nach au-ßen geht, um auch Kräfte in die Längsstruktur des Fahrzeuges, also die Längsträger 7, einzuleiten. Die Schraubplatte 2 hat eine deutlich längliche Form und ist flach. Die Fläche der Schraubplatte 2 kann jedoch, beispielsweise abschnittsweise, Biegungen und/oder Kanten aufweisen.

Die Schraubplatte 2 ist so lang, dass sie sich zumindest von einer Außenkante eines Längsträgers 7 bis zur Außenkante des gegenüberliegenden Längsträgers 7 des Fahrzeugrahmens 8 erstreckt und darüber hinausragt.

Die ersten Befestigungsmittel 3, nämlich Schrauben, klemmen die Konsole 1 in Kombination mit der Schraubplatte 2 an das Querrohr bzw. den Querträger 6. Die dritten Befestigungsmittel 5, nämlich Schrauben, stellen eine zusätzliche Verbindung zum Fahrzeug her, bevorzugt zu Längsträgern 7 des Fahrzeugs.

Zweite Befestigungsmittel 4, nämlich Schrauben, klemmen die Schraubplatte 2 zusätzlich im äußeren Bereich, also an ihren axialen Enden, an das Querrohr bzw. den Querträger 6 und ermöglichen eine zusätzliche Krafteinleitung in die Längsstruktur des Fahrzeuges. Die Schraubplatte 2 weist an beiden axialen Enden jeweils einen Befestigungsflansch 10 auf, der die Endbereiche der Schraubplatte bildet und zur Befestigung der Schraubplatte 2 an dem Fahrzeugrahmen 8, nämlich an dem Querträger 6 des Fahrzeugrahmens 8 ausgebildet ist. Die Konsole 1 ist in diesen Endbereichen vorzugsweise nicht an der Schraubplatte 2 und somit nicht an den Befestigungsflanschen 10 befestigt.

Die Schraubplatte 2 ist so gestaltet, dass sie ohne aufwändige Demontagetätigkeiten am Fahrzeug verbaut werden kann. Die Konsole 1 für die Anhängekupplung ist so gestaltet, dass sie nur mittels Schrauben am Fahrzeug befestigt wird.

Die Konsole 1 weist an beiden axialen Enden jeweils einen Befestigungsflansch 9 auf, zur Befestigung der Konsole 1 an den Längsträgern 7 des Fahrzeugrahmens 8. Die beiden Befestigungsflansche 9 stehen normal auf die längliche Erstreckung der Konsole 1, so dass sie parallel zu den Längsträgern 7 ausgerichtet sind. Die Konsole 1 ist zumindest in Bereichen, in denen sie mit der Schraubplatte verschraubt ist, länglich ausgebildet. Die Konsole 1 weist einen Bereich zur Befestigung der Anhängekupplung auf, der nicht länglich ausgebildet sein muss.

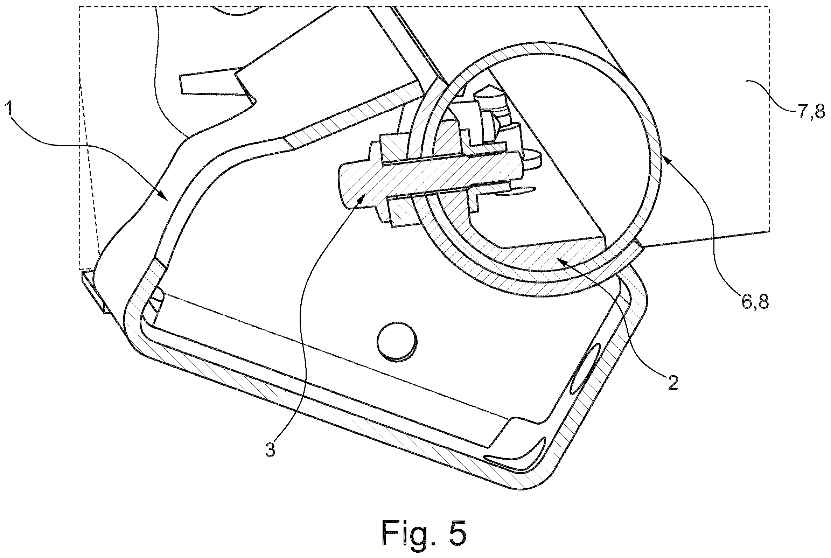

Fig. 5 stellt eine Schnittansicht einer Verschraubung der Konsole 1 mit der Schraubplatte 2 in einem erfindungsgemäßen Kraftfahrzeug mittels einem ersten Befestigungsmittel 3 dar.

Der Querträger 6 weist ein kreisförmiges Profil auf. Der Umfangsabschnitt des Profils am Querträger 6, an welchem die Schraubplatte 2 anliegt, ist daher gebogen, nämlich kreisbogenförmig, und die Schraubplatte 2 ist daher in diesem Umfangsabschnitt ebenfalls gebogen, nämlich im Wesentlichen kreisbogenförmig.

### Bezugszeichenliste

- 1: Konsole
- 2: Schraubplatte
- 3: erste Befestigungsmittel, Schraube
- 4: zweite Befestigungsmittel, Schraube
- 5: dritte Befestigungsmittel, Schraube
- 6: Querträger
- 7: Längsträger
- 8: Fahrzeugrahmen, Leiterrahmen
- 9: Befestigungsflansch
- 10: Befestigungsflansch

## Patentansprüche

1. Anhängevorrichtung, zur nachträglichen Montage einer Anhängekupplung an einem Kraftfahrzeug, wobei das Kraftfahrzeug einen tragenden Fahrzeugrahmen (7) aufweist, wobei der Fahrzeugrahmen (7) einen Querträger (6) mit einem Profil aufweist, wobei die Anhängevorrichtung eine Konsole (1) und eine Anhängekupplung umfasst, wobei die Konsole (1) ein längliches Bauteil ist, so dass sich die Konsole (1) zumindest abschnittsweise entlang des Querträgers (6) erstrecken kann, wenn sie am Querträger (6) befestigt ist, wobei an der Konsole (1) die Anhängekupplung befestigbar ist,
**dadurch gekennzeichnet , dass** die Anhängevorrichtung eine Schraubplatte (2) umfasst, wobei die Schraubplatte (2) ein längliches Bauteil ist, das dazu ausgebildet ist, in das Profil des Querträgers (6) seitlich eingeschoben zu werden und/oder im Inneren des Profils des Querträgers (6) am Profil anzuliegen, so dass die Schraubplatte (2) in montiertem Zustand innerhalb des Profils des Querträgers (6) angeordnet ist und an der Innenseite des Profils zumindest an einem Umfangsabschnitt des Profils anliegt, wobei die Konsole (1) und die Schraubplatte (2) dazu ausgebildet sind, dass die Konsole (1) an der Schraubplatte (2) mittels ersten Befestigungsmitteln (3), insbesondere mittels Schrauben, derart befestigt wird, dass das Profil des Querträgers (6) zwischen Konsole (1) und Schraubplatte (2) geklemmt ist.

2. Anhängevorrichtung nach Anspruch 1,
**dadurch gekennzeichnet , dass** das Profil des Querträgers (6) ein geschlossenes Profil ist, insbesondere ein Rundprofil oder ein Vierkantprofil, oder dass das Profil des Querträgers (6) ein offenes Profil ist, das einen Innenraum definiert, wie insbesondere ein C-Profil ist.

3. Anhängevorrichtung nach Anspruch 1 oder 2,
**dadurch gekennzeichnet , dass** der Umfangsabschnitt des Profils, an welchem die Schraubplatte (2) in montiertem Zustand anliegt, gebogen ist, insbesondere kreisbogenförmig ist und die Schraubplatte (2) daher in diesem Umfangsabschnitt gebogen ist, insbesondere kreisbogenförmig ist.

4. Anhängevorrichtung nach zumindest einem der vorhergehenden Ansprüche,
**dadurch gekennzeichnet , dass** die Konsole (1) an der Schraubplatte (2) mittels mehreren entlang ihrer Erstreckung in Längsrichtung hintereinanderliegenden ersten Befestigungsmitteln (3), insbesondere mehreren hintereinanderliegenden Schrauben, derart befestigt wird, dass das Profil des Querträgers (6) zwischen Konsole (1) und Schraubplatte (2) geklemmt ist.

5. Anhängevorrichtung nach zumindest einem der vorhergehenden Ansprüche,
**dadurch gekennzeichnet , dass** die Konsole (1) und die Schraubplatte (2) entlang ihrer Erstreckung in Längsrichtung mehrere einander zugeordnete Schraublöcher aufweisen,
so dass die Konsole (1) an der Schraubplatte (2) mittels durch die Schraublöcher sich erstreckenden ersten Befestigungsmitteln (3) befestigt werden kann.

6. Anhängevorrichtung nach zumindest einem der vorhergehenden Ansprüche,
**dadurch gekennzeichnet , dass** die Konsole (1) an zumindest einem axialen Ende, bevorzugt an beiden axialen Enden, einen Befestigungsflansch (9) aufweist, zur Befestigung der Konsole (1) an dem Fahrzeugrahmen (8), insbesondere an einem Längsträger (7) des Fahrzeugrahmens (8). [normal auf längliche Erstreckung der Konsole]

7. Anhängevorrichtung nach zumindest einem der vorhergehenden Ansprüche,
**dadurch gekennzeichnet , dass** die Schraubplatte (2) an zumindest einem axialen Ende, bevorzugt an beiden axialen Enden, einen Befestigungsflansch (10) aufweist, zur Befestigung der Schraubplatte (2) an dem Fahrzeugrahmen (8), insbesondere an dem Querträger (6) des Fahrzeugrahmens (8), wobei die Konsole (1) nicht an dem Befestigungsflansch (10) befestigt ist.

8. Anhängevorrichtung nach zumindest einem der vorhergehenden Ansprüche,
**dadurch gekennzeichnet , dass** die Schraubplatte (2) so lang ist, dass sie sich zumindest von einer Innenkante eines Längsträgers (7) bis zur Innenkante eines gegenüberliegenden Längsträgers (7) des Fahrzeugrahmens (8) erstreckt, bevorzugt zumindest von einer Außenkante eines Längsträgers (7) bis zur Außenkante eines gegenüberliegenden Längsträgers (7) des Fahrzeugrahmens (8) erstreckt.

9. Kraftfahrzeug mit einer Anhängevorrichtung nach zumindest einem der vorhergehenden Ansprüche,
**dadurch gekennzeichnet , dass** das Kraftfahrzeug einen tragenden Fahrzeugrahmen (8) aufweist, wobei der Fahrzeugrahmen (8) einen Querträger (6) mit einem Profil aufweist, wobei die Anhängevorrichtung eine Konsole (1) und eine Anhängekupplung umfasst, wobei die Konsole (1) ein längliches Bauteil ist, so dass sich die Konsole (1) zumindest abschnittsweise entlang des Querträgers (6) erstreckt und am Querträger (6) befestigt ist, wobei an der Konsole (1) die Anhängekupplung befestigt ist, wobei die Anhängevorrichtung eine Schraubplatte (2) umfasst, wobei die Schraubplatte (2) ein längliches Bauteil ist, das in das Profil des Querträgers (6) seitlich eingeschoben ist und/oder im Inneren des Profils des Querträgers (6) am Profil anliegt, so dass die Schraubplatte (2) innerhalb des Profils des Querträgers (6) angeordnet ist und an der Innenseite des Profils zumindest an einem Umfangsabschnitt des Profils anliegt, wobei die Konsole (1) an der Schraubplatte (2) mittels ersten Befestigungsmitteln (3), insbesondere mittels Schrauben, derart befestigt ist, dass das Profil des Querträgers (6) zwischen Konsole (1) und Schraubplatte (2) geklemmt ist.

10. Verfahren zur Herstellung eines Kraftfahrzeugs mit einer Anhängevorrichtung nach zumindest einem der vorhergehenden Ansprüche,
**dadurch gekennzeichnet , dass** die Schraubplatte (2) in das Profil des Querträgers (6) seitlich eingeschoben wird und/oder im Inneren des Profils des Querträgers (6) am Profil angelegt wird, so dass die Schraubplatte (2) innerhalb des Profils des Querträgers (6) angeordnet ist und an der Innenseite des Profils zumindest an einem Umfangsabschnitt des Profils anliegt, wobei die Konsole (1) an der Schraubplatte (2) mittels ersten Befestigungsmitteln (3), insbesondere mittels Schrauben, derart befestigt wird, dass das Profil des Querträgers (6) zwischen Konsole (1) und Schraubplatte (2) geklemmt wird.
